# EUROPÄISCHE PATENTSCHRIFT

(11) **EP 2 826 663 B1**
(45) Veröffentlichungstag und Bekanntmachung des Hinweises auf die Patenterteilung: **09.01.2019**
(21) Anmeldenummer: 14002312.8
(22) Anmeldetag: 07.07.2014
(51) Int. Cl.: B60N 2/56

(54) **Klimatisierungseinrichtung für einen Fahrzeugsitz**
Air conditioning unit for a vehicle seat
Dispositif de climatisation pour un siège de véhicule

(30) Priorität: 09.07.2013 DE 202013006135 U
(43) Veröffentlichungstag der Anmeldung: 21.01.2015
(73) Patentinhaber: I.G. Bauerhin GmbH, 63584 Gründau (DE)
(72) Erfinder: Bauer, Stefan, 63755 Alzenau (DE); Schleucher, Thorsten, 63594 Hasselroth (DE)
(74) Vertreter: Grimm, Ekkehard

(56) Entgegenhaltungen:
- WO-A1-2010/045831
- JP-A- 2012 229 887
- US-A1- 2011 109 128

## Beschreibung

Die vorliegende Erfindung betrifft eine Klimatisierungseinrichtung für einen Fahrzeugsitz mit einem Abstandsmaterial, das zumindest einen Teil eines Luftverteilungsraums bildet, einer das Abstandsmaterial auf der Oberseite abdeckenden Oberseitenschicht, einer das Abstandsmaterial auf der der Oberseitenschicht gegenüberliegenden Unterseite abdeckenden, im Wesentlichen für Luft undurchlässigen Unterseitenschicht, wobei die Oberseitenschicht und die Unterseitenschicht um den Außenumfang des Abstandsmaterials herum miteinander verbunden sind, einer Luftzufuhröffnung zu dem Luftverteilungsraum und Luftaustrittsöffnungen in der Oberseitenschicht zur Abgabe von Luft aus dem Luftverteilungsraum.

Solche Klimatisierungseinrichtungen sind allgemein bekannt und beispielsweise in der US 2011/0109128A1 beschrieben.

Die US 2011/0109128 A1 beschreibt einen Luftverteiler, der einen plattenartigen Körper umfasst, der zwischen einem Sitzkissenelement und einer sitzkissentragenden Struktur eines Sitzes angeordnet ist. Der Körper weist zwei voneinander beabstandete, gegenüberliegende Platten auf, die durch eine Vielzahl von Trennwänden verbunden und dadurch auf Abstand gehalten sind. Dadurch ist eine Mehrzahl von Luftkanälen innerhalb des Körpers gebildet. Eine Öffnung in dem Körper definiert eine Luftöffnung, die mit einer Luftbewegungseinrichtung verbunden wird. Die offenen Seiten der Kanäle des Körpers werden in den verschiedenen Ausführungsformen abgedichtet, indem beispielsweise ein Klebestreifen die offenen Enden der Luftkanäle abdeckt, der auf der Außenseite der oberen und unteren Platte verklebt wird. Auch ist zur Abdichtung eine Kappe angegeben, die von außen angesetzt wird.

Die JP 2012-229887 A beschreibt einen kälteisolierenden Körper für einen Fahrzeugsitz, wobei innerhalb des kälteisolierenden Körpers, in gewissen Bereichen, ein Gelmittel angeordnet ist. Der kälteisolierende Körper weist eine Mehrzahl von Stanzlöchern auf, die in Bereichen, mit Ausnahme derer, in denen das Gelmittel angeordnet ist, eingebracht sind. Ein an der einem Benutzer abgewandten Seite des kälteisolierenden Körpers angebrachter elastischer Mehrlochkörper weist eine Vielzahl von Belüftungsströmungsöffnungen auf, wobei der Mehrlochkörper und der kälteisolierende Körper, der mit dem Mehrlochkörper in Wirkverbindung steht, durch ein umlaufendes Profil um deren äußeren Umfang herum abgedichtet sind, indem das Profil den Umfangsrand dieses Verbundkörpers außen umgreift. Eine Luftfördereinrichtung steht in Strömungsverbindung mit dem Mehrlochkörper und dem kälteisolierenden Körper.

Die EP 2 423 040 A2 beschreibt einen Einsatz zum Belüften eines Sitzes mit einem luftdurchlässigen Abstandsteil, das von einer luftundurchlässigen Abdeckung eingehüllt ist, wobei dieses Abdeckteil ähnlich einer Tasche ausgebildet ist. Die Oberseite und die Unterseite dieser Tasche sind am Rand flächig aufeinanderliegend verbunden. Um den Umfangsrand herum sind Luftdurchgangslöcher angeordnet.

Die DE 203 21 141 U1 beschreibt einen Einsatz zum Belüften eines Fahrzeugsitzes, der unterhalb des Bezugs eines Sitzkissens oder einer Rückenlehne angeordnet wird. Der Einsatz besitzt ein Abstandsmaterial, das an seiner Unterseite durch eine Barriereschicht abgedeckt ist, wobei diese Barriereschicht an dem Abstandsmaterial mittels einer Klebeschicht befestigt ist. Auf der Oberseite ist das Abstandsmaterial durch eine weitere Barriereschicht abgedeckt, die wiederum mit einer Klebeschicht an dem Abstandsmaterial befestigt ist. Auf der Barriereschicht ist, wiederum über eine Klebeschicht, eine Heizungsschicht befestigt, die ihrerseits durch eine Pufferschicht bedeckt ist. In den Schichten oberhalb des Abstandsmaterials befinden sich Durchgangslöcher. Das Abstandsteil mit den darauf angeordneten Schichten besitzt einen Fortsatz, der dazu dient, über einen von der Sitzfläche oder der Rückenlehnenfläche entfernt angeordneten Lüfter Luft zuzuführen.

Die DE 10 2005 014 333 A1 bezieht sich auf einen klimatisierten Sitz und eine Klimatisierungseinrichtung. Die Klimatisierungseinrichtung umfasst eine unterhalb der Oberfläche der Sitzfläche oder unterhalb der Fläche der Lehne angeordnete Klimamatte, die mit einer Luftführungseinrichtung, beispielsweise einem Lüfter, in Verbindung steht. Die Klimamatte ist als Sack aus einem im Wesentlichen luftundurchlässigen Material aufgebaut, wobei der Sack an seiner Oberseite Luftdurchlassöffnungen aufweist.

Die DE 10 2006 004 465 A1 beschreibt ein Einlegerteil für einen klimatisierten Fahrzeugsitz. Das Einlegerteil umfasst mindestens eine luftdurchlässige obere Decklage, eine darunterliegende, dreidimensionale Luftverteilungsschicht und mindestens eine untere Decklage, die mindestens einen Lufteinlass umfasst. Die obere Decklage und die untere Decklage sind entlang einer seitlich umlaufenden Kante der Luftverteilungsschicht miteinander verbunden.

Der vorliegenden Erfindung liegt die Aufgabe zugrunde, eine Klimatisierungseinrichtung für einen Fahrzeugsitz zu schaffen, die einen einfachen Aufbau aufweist, einfach herzustellen ist und den Anforderungen, die an eine solche Klimatisierungseinrichtung im Einsatz in einem Fahrzeug gestellt werden, gerecht wird.

Gelöst wird diese Aufgabe durch eine Klimatisierungseinrichtung für einen Fahrzeugsitz mit den Merkmalen des Anspruchs 1. Bevorzugte Ausführungsformen ergeben sich aus den abhängigen Ansprüchen.

Die erfindungsgemäße Klimatisierungseinrichtung ist dadurch gekennzeichnet, dass die Oberseitenschicht und die Unterseitenschicht zumindest um den Außenumfang herum über eine rahmenförmige Einlage verbunden sind. Eine solche rahmenförmige Einlage umgibt das Abstandsmaterial, bei dem es sich vorzugsweise um ein Abstandsgewirke handelt, das einen Luftverteilungsraum zwischen der Oberseitenschicht und der Unterseitenschicht begrenzt. Diese rahmenförmige Einlage sollte aus einem Material aufgebaut sein und solche Eigenschaften besitzen, dass sie im Wesentlichen für Luft undurchlässig ist, so dass die Einlage den Luftverteilungsraum nach außen strömungsmäßig begrenzt.

Eine Klimatisierungseinrichtung gemäß der Erfindung kann in einem Fahrzeugsitz integriert unmittelbar auf den Polsterkern des Sitzes aufgelegt werden. Sie ist aber insbesondere auch dafür geeignet, in eine Vertiefung oder Ausnehmung eines Polsterkerns, der beispielsweise aus Schaumstoff geschäumt ist, eingelegt zu werden. Gerade im letzteren Fall könnte eine solche Vertiefung oder Ausnehmung derart dimensioniert werden, dass zwischen dem Umfang der rahmenförmigen Einlage der Klimatisierungseinrichtung und dem Umfang der Vertiefung oder Ausnehmung ein Freiraum verbleibt, der einen Kanal bildet, über den Luft zu- oder abgeführt und gegebenenfalls auch Wasserdampf abgeführt werden kann. Hierbei wird die rahmenförmige Einlage aus einem Material aufgebaut, das teilweise für Luft und/oder für Wasserdampf durchlässig ist.

Die rahmenförmige Einlage der Klimatisierungseinrichtung, die das Abstandsmaterial in Umfangsrichtung begrenzt, hat den Vorteil, dass der Klimatisierungseinrichtung auch im Randbereich eine im Wesentlichen exakte rechtwinklige Kontur gegeben werden kann, da die Oberseitenschicht und die Unterseitenschicht unmittelbar am Rand der rahmenförmigen Einlage, an der diese Schichten verklebt sind, enden können. Ein weiterer Vorteil der rahmenförmigen Einlage ist darin zu sehen, dass das Material der Einlage dem Material des Abstandsmaterials, insbesondere in Bezug auf die Stauchhärte, angepasst werden kann, wodurch sichergestellt werden kann, dass eine auf dem Sitz sitzende Person keine Materialübergänge wahrnimmt. Die erfindungsgemäße Klimatisierungseinrichtung eignet sich besonders dazu, in einen Sitzpolsterkern bei dessen Herstellung unmittelbar eingeschäumt zu werden. In einem solchen Fall sollte das Material der rahmenförmigen Einlage so ausgewählt werden, dass der Schaum nicht durch das Material der Einlage bis in den Luftverteilungsraum eindringt. In diesem Fall wird als Material für die rahmenförmige Einlage im Wesentlichen geschlossenzelliger Schaumstoff verwendet. Weitere Vorteile der rahmenförmigen Einlage sind eine feste Verbindung mit dem Polster- oder Schaumkern. Beim Einschäumen der Klimatisierungseinrichtung in einen Schaumkern verhindert die rahmenförmige Einlage das Eindringen des Schaums. Durch die rahmenförmige Einlage wird eine plane Oberfläche gebildet, die bei einem Einschäumprozess wichtig ist; somit wird eine Faltenbildung bzw. ein Überschäumen der Klimatisierungseinrichtung vermieden. Eine mögliche Faltenbildung, die sich auf der Seite, auf der eine Person sitzt, eines Sitzbezuges abzeichnen könnte, wird dadurch vermieden.

Das Material für die rahmenförmige Einlage ist ein Schaumstoff, der aus Kostensicht von besonderem Vorteil ist.

Falls die rahmenförmige Einlage mit der Oberseitenschicht und/oder der Unterseitenschicht verklebt wird, sollte als Klebemittel ein auf seiner Oberseiten- und/oder Unterseitenschicht aufgebrachtes, temperaturaktivierbares Klebemittel verwendet werden. Bevorzugt sollte als Klebemittel ein beidseitig klebendes Klebeband eingesetzt werden, da mit diesem Klebematerial eine schnellere Verbindung zwischen der Oberseitenschicht und/oder der Unterseitenschicht mit der rahmenförmigen Einlage möglich ist.

Die rahmenförmige Einlage wird vorteilhafterweise so dimensioniert, dass sie eine Breite, in Richtung der Ebene der Oberseitenschicht oder der Unterseitenschicht gesehen, von 5 mm bis 30 mm, bevorzugt von 5 mm bis 20 mm, oder von 10 mm bis 15 mm, aufweist. Abhängig von dem eingesetzten Material kann die rahmenförmige Einlage in einer sehr geringen Breite, beispielsweise auch in einer Breite zwischen 5 mm und 10 mm, ausgeführt werden, so dass eine sehr große Fläche der Klimatisierungseinrichtung als Luftverteilungsraum genutzt werden kann. Als besonderer Vorteil der rahmenförmige Einlage ist auch hervorzuheben, dass sie in unterschiedlichen Breiten entlang des Umfangs des Abstandsmaterials ausgeführt werden kann, so dass die Umfangskontur des Luftverteilungsraums den Gegebenheiten der Sitzfläche eines Sitzes, der klimatisiert werden soll, in einfacher Weise anpassbar ist.

Die rahmenförmige Einlage sollte, in Richtung senkrecht zu der Ebene der Oberseitenschicht oder der Unterseitenschicht gesehen, eine Dicke aufweisen, die in etwa der Dicke des Abstandsmaterials in dieser Richtung entspricht.

In einer weiteren, als besonders bevorzugt anzusehenden Ausführungsform weist das Abstandsmaterial mindestens eine Ausstanzung auf, die mit einem Inlay aus einem im Wesentlichen luftundurchlässigen Material ausgefüllt ist. Durch solche Inlays kann der Luftverteilungsraum in unterschiedliche Strömungsbereiche unterteilt und damit strukturiert werden. Hierbei ist auch vorgesehen, dass solche Inlays über zumindest einen Steg mit der rahmenförmigen Einlage einstückig verbunden sind. In einem solchen Fall wird die rahmenförmige Einlage mit dem Inlay bzw. den Inlays als ein einzelnes, zusammenhängendes, strukturiertes Gebilde hergestellt, in das dann ein entsprechend konturiertes Abstandsmaterial, den Luftverteilungsraum bildend, eingesetzt wird.

Als Material für die Inlays kann dasselbe Material wie für die rahmenförmige Einlage verwendet werden. Es ist aber auch möglich, die Inlays aus einem anderen Material zu fertigen; jedoch sollte das Material die Eigenschaften des Abstandsmaterials, insbesondere in Bezug auf die Stauchhärte der gesamten Fläche des Abstandsmaterials, nicht wesentlich verändern, so dass eine auf dem Sitz sitzenden Person keine Strukturierung innerhalb der Klimatisierungseinrichtung bzw. der Fläche des Abstandsmaterials wahrnimmt. Als Material für die Inlays ist ein Schaumstoff, Zellkautschuk, Moosgummi oder ein silikonartiges Material zu nennen.

Die Inlays können, ebenso wie die rahmenförmige Einlage, mit der Oberseitenschicht und/oder der Unterseitenschicht verklebt werden.

Das mindestens eine Inlay kann auch mit dem Abstandsmaterial verklebt sein. Das Inlay kann mittels Heißkleber, Klebeband oder entsprechenden Klebestreifen mit dem Abstandsmaterial überlappend verbunden werden.

Wenn Inlays innerhalb des Abstandsmaterials vorgesehen werden, kann innerhalb des Bereichs solcher Inlays eine von der Oberseitenschicht bis zur Unterseitenschicht reichende Durchgangsöffnung ausgebildet werden, die sich durch die Oberseitenschicht und gegebenenfalls durch die Unterseitenschicht fortsetzt. Solche Durchgangsöffnungen können als Abspannöffnungen für den Sitzbezug eingesetzt werden. Gegebenenfalls können solche Durchgangsöffnungen für eine Luftzuführung oder eine Luftabführung zu oder von der Sitzfläche dienen. Da diese Durchgangsöffnungen in den Inlays ausgeführt sind, werden die Durchgangsöffnungen durch das Material der Inlays zum Luftverteilungsraum hin abgedichtet. Gleichzeitig wird das Abstandsmaterial durch die Inlays stabilisiert bzw. das Abstandsmaterial wird nicht durch die Durchgangsöffnungen geschwächt oder im Stauchverhalten wesentlich verändert.

Mit den Inlays kann ohne zusätzlichen konstruktiven Aufwand die Luftströmung innerhalb des Luftverteilungsraums geleitet und in die unterschiedlichen Bereiche des Luftverteilungsraums verteilt oder kanalisiert werden; das bedeutet solche Inlays bilden Strömungsleitkörper. Bevorzugt können die Inlays, in der Funktion als Strömungsleitkörper, in Strömungsrichtung gesehen, einen tropfenförmigen Querschnitt aufweisen, wobei der Querschnitt so ausgerichtet wird, dass die breite Seite die Anströmseite für den Luftstrom darstellt.

Es ist auch vorgesehen, dass die Oberseitenschicht zusätzlich zu den Luftaustrittsöffnungen zumindest teilweise für Luft durchlässig ist. Hierbei nimmt vorzugsweise die Anzahl der Luftaustrittsöffnungen pro Flächeneinheit des Luftverteilungsraums, in Projektion auf die Oberseitenschicht gesehen, mit zunehmendem Abstand von der Luftzufuhröffnung zu.

Die rahmenförmige Einlage bietet eine einfache, konstruktive Möglichkeit, die Luftzufuhröffnung zu dem Luftverteilungsraum durch eine Unterbrechung der rahmenförmigen Einlage auszuführen. Es können darüber hinaus weitere Luftzuführöffnungen zu dem Luftverteilungsraum und/oder Luftabführöffnungen aus dem Luftverteilungsraum durch Unterbrechungen oder Freiräume in der rahmenförmige Einlage gebildet werden.

In einer weiteren Ausführungsform weist die Oberseitenschicht auf der einer Person zugewandten Seite einen Bereich oder zumindest einen Teilbereich auf, der eine ferromagnetische und/oder magnetische Schicht aufweist. Diese Schicht ermöglicht, während eines weiteren Verarbeitungsprozesses, ein Fixieren der Klimatisierungseinrichtung, beispielsweise beim Einschäumen der Klimatisierungseinrichtung in einen Schaumkern. Mit dieser ferromagnetischen und/oder magnetischen Schicht wird ein Eindringen von Fremdkörpern bzw. Fremdmaterial während des weiteren Verarbeitungsprozesses verhindert.

In einer weiteren Ausführungsform weist die Oberseitenschicht eine weitere luftundurchlässige Lage auf, so dass die Oberseitenschicht aus einem mehrschichten Aufbau bestehen kann. Bei einem mehrschichtigen Aufbau ist es von besonderer Bedeutung, dass mindestens eine Luftdurchlassöffnung in der weiteren luftundurchlässigen Lage und in der Oberseitenschicht vorhanden sind.

In einer weiteren Ausführungsform weist die Oberseitenschicht nur in dem Bereich Löcher auf, in dem die rahmenförmige Einlage angeordnet ist. Dabei verlaufen die in der Oberseitenschicht eingebrachten Löcher auch durch die rahmenförmige Einlage. Hierzu kann die rahmenförmige Einlage am Rand, in Richtung des Luftverteilungsraums, seitlich eingebrachte Einkerbungen aufweisen, so dass Luft von dem Luftverteilungsraum durch die rahmenförmige Einlage und die Oberseitenschicht strömen kann.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: eine schematische Darstellung einer Klimatisierungseinrichtung gemäß einer ersten Ausführungsform der Erfindung in einer Draufsicht,
- Figur 2: eine Darstellung entsprechend Figur 1 einer zweiten Ausführungsform der Erfindung,
- Figur 3: eine dritte Ausführungsform einer Klimatisierungseinrichtung gemäß der Erfindung mit zusätzlichem Luftzu- und/oder Luftabführteil,
- Figur 4A: eine perspektivische Teilansicht der Klimatisierungseinrichtung der Figur 1 aus Richtung der Schnittlinie 4A-4A in Figur 1,
- Figur 4B: die Teilansicht der Klimatisierungseinrichtung der Figur 4A in einer Explosionsdarstellung,
- Figur 5: eine Darstellung entsprechend Figur 3 in einer weiteren Ausführungsform der Erfindung,
- Figur 6: eine Darstellung entsprechend Figur 2, bei der jedoch die Luftzuführöffnung als auch die Luftaustrittöffnungen auf derselben Materialseite angeordnet sind,
- Figur 7: eine Darstellung entsprechend Figur 1, bei der jedoch die Luftzuführöffnung als auch die Luftaustrittöffnungen auf derselben Materialseite angeordnet sind,
- Figur 8: eine Darstellung entsprechend Figur 6 in einer weiteren Ausführungsform, und
- Figur 9: eine Darstellung entsprechend Figur 8, bei der jedoch die Luftzuführöffnung als auch die Luftaustrittöffnungen auf derselben Materialseite angeordnet sind.

Sofern in den einzelnen Figuren Bauteile mit denselben Bezugszeichen bezeichnet sind, so können die Ausführungen dieser Bauteile zu einer Figur in analoger Weise auf die entsprechenden Bauteile anderer Figuren übertragen werden, ohne dass diese Bauteile zu den anderen Figuren nochmals beschrieben sind.

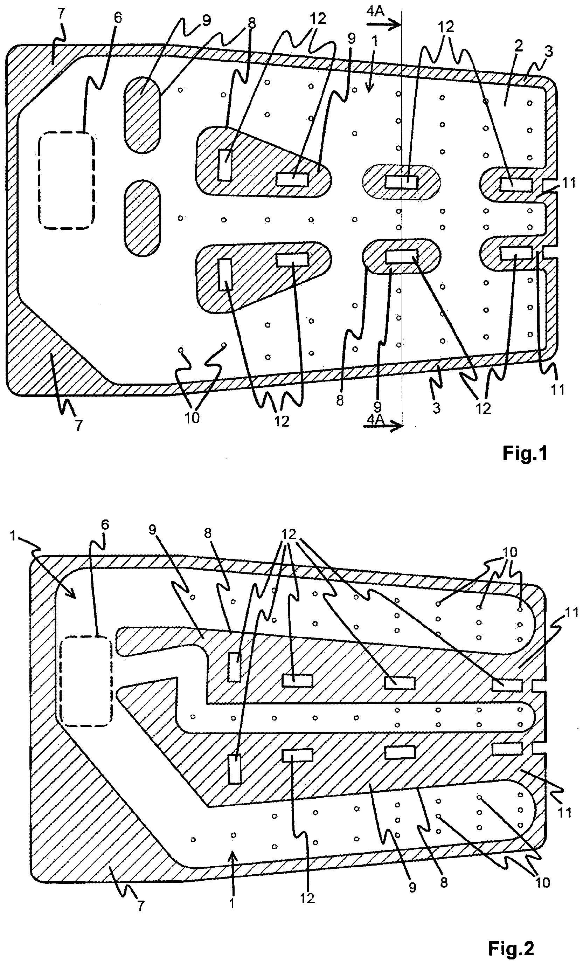

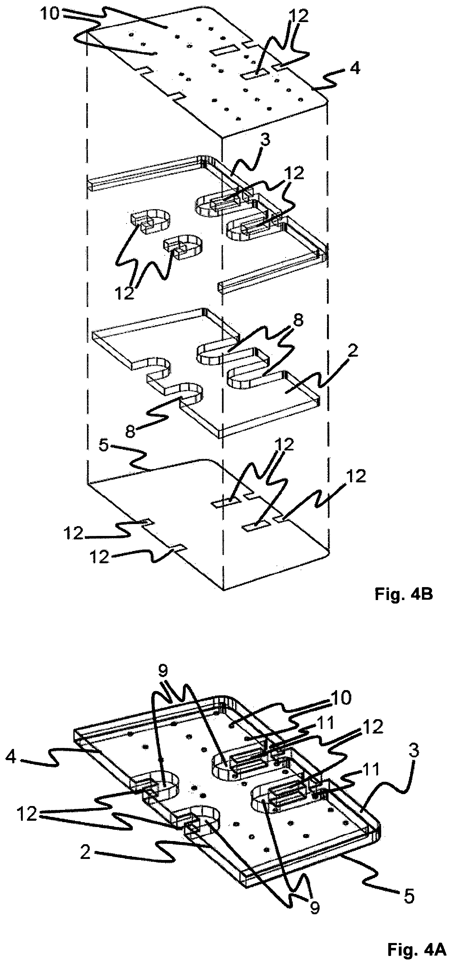

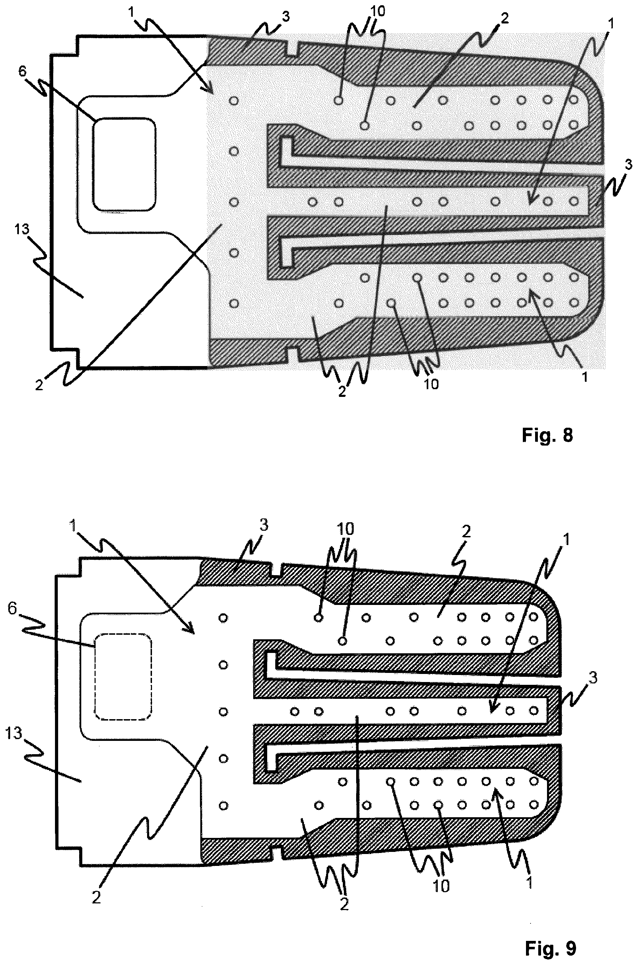

Die Klimatisierungseinrichtungen in den verschiedenen Ausführungsformen, die in den Figuren 1 bis 9 dargestellt sind, umfassen einen Luftverteilungsraum 1, der von einem Abstandsmaterial 2 ausgefüllt ist und durch eine rahmenförmige Einlage 3 um den Außenumfang herum begrenzt ist. Wie insbesondere anhand der Figuren 4A und 4B zu erkennen ist, sind das Abstandsmaterial 2 und die rahmenförmige Einlage 3 auf der Oberseite, die einer auf dem Sitz sitzenden Person zugewandt ist, durch eine Oberseitenschicht 4 und auf der Unterseite durch eine Unterseitenschicht 5 abgedeckt. Die Flächen der Oberseitenschicht 4 und der Unterseitenschicht 5 sind in Projektion aufeinander der Außenkontur der rahmenförmige Einlage 3 angepasst, so dass sie in den dargestellten Ausführungsformen nicht über die rahmenförmige Einlage 3 nach außen überstehen. Die Oberseitenschicht 4 und die Unterseitenschicht 5 sind jeweils mit der Oberseite und der Unterseite der rahmenförmigen Einlage 3 verklebt. Das Abstandsmaterial 2 und die rahmenförmige Einlage 3 besitzen dieselbe Dicke, wie anhand der Figuren zu erkennen ist.

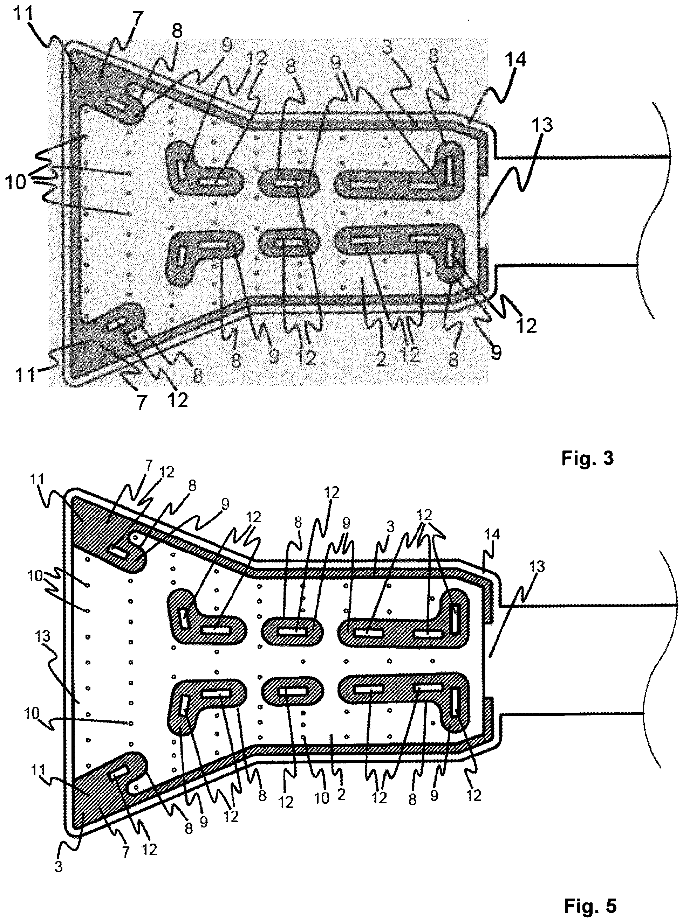

Die erfindungsgemäße Klimatisierungseinrichtung bietet auch die Möglichkeit, dass die Oberseitenschicht 4 flächenmäßig größer ausgeführt wird als die durch die Außenkontur der rahmenförmigen Einlage 3 begrenzte Fläche, so dass umlaufend um die rahmenförmige Einlage 3 ein schmaler Flächenabschnitt der Oberseitenschicht 4 übersteht. Mit diesem überstehenden Flächenabschnitt, der nicht in den Figuren 1 und 2 gezeigt ist, der aber aus Figur 3 ersichtlich ist und mit dem Bezugszeichen 14 gekennzeichnet ist, kann die Klimatisierungseinrichtung, wenn sie beispielsweise in einer Vertiefung in dem Polsterkern eingelegt ist, an der Oberseite des Polsterkerns befestigt werden.

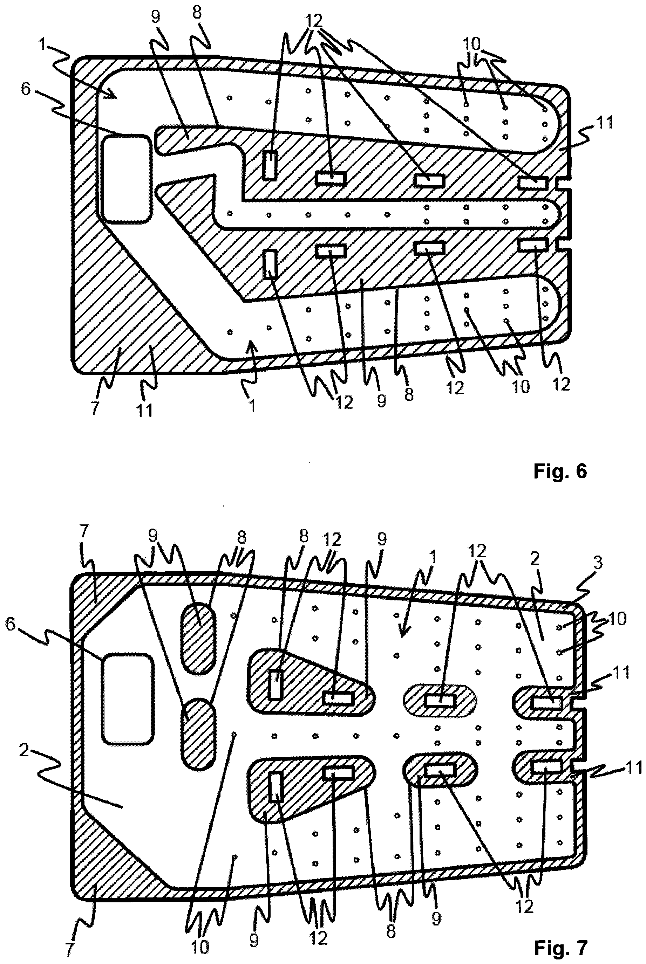

In der Unterseitenschicht 5 ist eine Luftzufuhröffnung 6 zu dem Luftverteilungsraum 1, die gegebenenfalls auch als Luftabfuhröffnung verwendet werden kann, vorhanden, über die der Luftverteilungsraum 1 strömungsmäßig mit einer nicht dargestellten Lüftereinheit verbunden werden kann. Die Luftzufuhröffnung 6 oder gegebenenfalls die Luftabfuhröffnung sind in den Figuren 1, 2 und 9 in unterbrochener Linie dargestellt, da diese Öffnungen in der Unterseitenschicht 5, und nicht in der Oberseitenschicht 4, vorhanden sind. In den Figuren 6, 7 und 8 sind die Luftzuführöffnung 6 oder gegebenenfalls die Luftabfuhröffnung und die Luftaustrittsöffnung 10 auf der gleichen Seite der Oberseitenschicht 4 angeordnet, wobei die Lage dieser Öffnungen der Einbausituation im Fahrzeugsitz angepasst wird.

Die rahmenförmige Einlage 3 besitzt um den größten Teil des Umfangs der Klimatisierungseinrichtung herum eine gleichbleibende Breite, in Richtung parallel zu der Ebene der Oberseitenschicht oder der Unterseitenschicht gesehen, von 5 mm bis 30 mm, bevorzugt von 5 mm bis 20 mm, oder von 10 mm bis 15 mm. Die Breite sollte möglichst gering sein, so dass im Verhältnis zu der Fläche, die durch den Außenumfang der Klimatisierungseinrichtung aufgespannt wird, eine große Fläche für den Luftverteilungsraum 1 verbleibt. Folglich ist auch eine Breite der rahmenförmigen Einlage 3, zumindest in bestimmten Bereichen der Klimatisierungseinrichtung, von 5 mm und weniger, das bedeutet von 3 mm bis 5 mm, vorgesehen. Durch die rahmenförmige Einlage 3 ist es in einfacher Weise möglich, die Kontur des Luftverteilungsraums 1 zu verändern, indem Teile der rahmenförmige Einlage 3 größere Flächen des Raums zwischen der Oberseitenschicht 4 und der Unterseitenschicht 5 ausfüllen, wie dies beispielsweise in Eckbereichen 7 in den Figuren 1, 2, 3 oder auch in der Figur 5 dargestellt ist.

In den gezeigten Ausführungsformen sind innerhalb des Abstandsmaterials 2 Ausstanzungen 8 vorhanden, die mit Inlays 9 ausgefüllt sind. Vorzugsweise ist das Material für diese Inlays 9 dasselbe Material, das auch für die rahmenförmige Einlage 3 eingesetzt ist. Das Material für die rahmenförmige Einlage 3 ist ein Schaumstoff, der darüber hinaus im Wesentlichen geschlossenporig und damit im Wesentlichen luftundurchlässig ist. Weitere Materialien für die Inlays 9 sind Moosgummi, Folie, reversibel stauchbarer Kunststoff, Vlies, Filz, oder ein silikonartiges Material.

Die Inlays 9 sollen aus einem im Wesentlichen luftundurchlässigen Material bestehen, so dass im Bereich der Inlays 9 über das Material der Inlays keine Luft zumindest in Richtung der Oberseitenschicht 4 geführt wird, obwohl eine geringe Luftdurchlässigkeit der Inlays 9 die Klimatisierungseigenschaften nicht beeinflusst; sie sollen daher aus einem im Wesentlichen luftundurchlässigen Material bestehen. Gleiches gilt für das Material der rahmenförmigen Einlage 3.

Die verschiedenen Materialien, die für die rahmenförmige Einlage 3 und/oder die Inlays 9 eingesetzt werden, sollten luftundurchlässig sein. Da manche Materialien, die als luftundurchlässig bezeichnet werden, dennoch einen bestimmten Luftdurchsatz zulassen, sind mit der Angabe der im Wesentlichen Luftundurchlässigkeit des Materials der Einlage 3 und/oder der Inlays 9 auch solche Materialien zu verstehen, die bis zu 30% luftdurchlässig sind; allerdings ist es bevorzugt, dass die Luftdurchlässigkeit weniger als 20%, noch bevorzugter weniger als 10%, oder weniger als 5% beträgt.

Anhand der Figuren 1, 2 und 4 bis 7 ist ersichtlich, dass die Inlays 9 derart innerhalb des Luftverteilungsraums 1 positioniert sind, dass sie eine Luftströmung innerhalb des Luftverteilungsraums 1 von der Luftzufuhröffnung 6 aus oder zu dieser hin, falls sie als Luftabführöffnung verwendet wird, leiten, verteilen und/oder kanalisieren. Die Luftzirkulation innerhalb des Luftverteilungsraums 1 erfolgt über Luftaustrittsöffnungen 10 in der Oberseitenschicht 4, die unterschiedlich über die Fläche der Oberseitenschicht 4 verteilt sein können. Sie sind so positioniert, dass deren Anzahl pro Flächeneinheit mit zunehmendem Abstand von der Luftzufuhröffnung 6 zunimmt.

Um die Luftströmung innerhalb des Luftverteilungsraums 1 zu kanalisieren, können die Inlays 9 in bestimmten Bereichen mit der rahmenförmige Einlage 3 verbunden werden, wie dies in den Figuren 1, 2, 4, 6 und 7 an den mit dem Bezugszeichen 11 gekennzeichneten Stellen der Fall ist. Eine an den Enden zumindest in Strömungsrichtung gesehen abgerundete Anströmfläche der Inlays 9 ebenso wie eine Tropfenform (siehe Figuren 1 und 7) sind bevorzugt.

Innerhalb zumindest eines Teils der Inlays 9 sind durch das Abstandsmaterial 2 hindurchführende und sich in der Oberseitenschicht 4 und gegebenenfalls in der Unterseitenschicht 5 fortsetzende Durchgangsöffnungen 12 (siehe auch Figur 4B) vorhanden, die beispielsweise als Abspannöffnungen für einen Sitzbezug dienen und sich für eine solche Verwendung in einen nicht dargestellten Polsterkern fortsetzen. Da diese Durchgangsöffnungen 12 in den Inlays 9 gebildet sind, werden sie durch ein entsprechendes im Wesentlichen luftundurchlässiges Material der Inlays 9 gegen den Luftverteilungsraum 1 abgedichtet, ohne dass hierzu weitere konstruktive Maßnahmen erforderlich wären.

Als bevorzugtes Material für die Oberseitenschicht 4 wird, gerade in Verbindung mit der rahmenförmigen Einlage 3 und den Inlays 9, ein Gewebe, ein nicht gewebtes Textil, eine Kunststofffolie oder ein Folienmembranmaterial verwendet. Solche Materialien sind zum einen dampfdurchlässig und lassen sich zum anderen gut mit der Oberseite der rahmenförmigen Einlage 3 und den Inlays 9 verkleben. Diese Oberseitenschicht 4 sollte eine Dicke von 0,5 mm bis 10 mm, vorzugsweise von etwa 1 mm bis 3 mm, aufweisen, gerade dann, wenn sie aus Vlies gebildet wird. Als Material für die Unterseitenschicht 5 wird ein luftundurchlässiges Material eingesetzt, beispielsweise eine Kunststofffolie, Filz, verdichtetes Vlies oder Folienmembranmaterial. Im Gegensatz zu dem Material der Oberseitenschicht 4 muss das Material der Unterseitenschicht 5 luftundurchlässig sein.

Auch ist es möglich, dass auf der Oberseitenschicht 4 eine Heizungslage angeordnet ist. Vorteilhafterweise bildet die Oberseitendeckschicht die Heizungslage.

Das Material der rahmenförmige Einlage 3 und/oder der Inlays 9 sollte vorzugsweise eine Stauchhärte von 2 kPa bis 30 kPa, vorzugsweise eine Stauchhärte von 2 kPa bis 15 kPa, besonders bevorzugt eine Stauchhärte von 4 kPa bis 10 kPa, haben. Bei dieser Stauchhärte, die auch das Abstandsmaterial 2 haben sollte, ist gewährleistet, dass die Klimatisierungseinrichtung auch dann, wenn eine Person auf dem Sitz Platz nimmt, in ihrer Form stabil verbleibt.

In den Figuren ist zu erkennen, dass der Luftverteilungsraum 1 durch die Inlays 9 in drei Strömungskanäle oder Strömungsbereiche unterteilt ist, und zwar quer zu den Strömungspfaden zwischen Luftzufuhröffnung 6 und Luftaustrittsöffnungen 10 gesehen. Hierbei entspricht diese Querrichtung dann, wenn diese Klimatisierungseinrichtung in eine Sitzfläche oder eine Rückenlehne eines Fahrzeugsitzes eingebaut ist, der Breite der Sitzfläche oder der Rückenlehne.

In den Figuren 3 und 5 ist die rahmenförmige Einlage 3 an ihrem einen Ende durch eine Unterbrechung 13 unterbrochen, so dass in einer solchen Ausführung der Figuren 3 und 5 die Luftzufuhröffnung, die in den Figuren 1, 2, 6 und 7 bis 9 mit dem Bezugszeichen 6 bezeichnet ist, durch diese Unterbrechung ersetzt ist. Die Klimatisierungseinrichtung der Figuren 3 und 5 ist beispielsweise für die Anordnung in einer Rückenlehne vorgesehen, wobei in einem solchen Fall die Öffnung 13 über ein geeignetes Mittel, beispielsweise einen Folienschlauch, ein spiralförmiges Material oder ein Abstandsgewirke, in dem Kanäle eingearbeitet sind, mit einem nicht näher dargestellten Lüfter verbunden werden kann.

In Figur 5, die eine weitere Ausführungsform von Figur 3 ist, weist die rahmenförmige Einlage 3 an zwei Enden jeweils eine Unterbrechung 13 auf, so dass in einer solchen Ausführung der Luftzufuhröffnung, die in den Figuren 1, 2 und 6 bis 9 mit dem Bezugszeichen 6 bezeichnet ist, durch diese Unterbrechung ersetzt ist und wie aus Figur 5 zu entnehmen ist, in einem vorderen Bereich der Klimatisierungseinrichtung, der der Luftzuführöffnung gegenüberliegend, die rahmenförmige Einlage 3 ebenfalls unterbrochen ist, dies kann notwendig sein, wenn in einem vorderen Bereich eines nicht dargestellten Polsterkerns es die Einbausituation nicht zulässt. In diesem Falle wäre die Oberseitenschicht mit der Unterseitenschicht, in diesem Bereich, mittels dazwischen angeordnetem Kleber, verbunden. Somit ist es in dieser Ausführungsform notwendig, den Rahmen der rahmenförmigen Einlage 3 auf mindestens zwei Seiten des Außenumfangs der Klimatisierungseinrichtung zu erstrecken.

In den Figuren 1, 2 und 6 bis 9 ist die Luftzuführöffnung 6 außermittig in der Oberseiten- oder Unterseitenschicht 4, 5 angeordnet. Eine mittig angeordnete Luftzuführöffnung 6 in der Oberseiten- oder Unterseitenschicht 4, 5 ist ebenfalls möglich, je nachdem welche Variante die Einbausituation zulässt. Damit trotz außermittig angeordneter Luftzuführöffnung 6 eine homogene Luftverteilung auf der einer Person zugewandten Seite zu erreichen, werden die Luftaustrittsöffnungen 10 entsprechend asymmetrisch auf der Oberseitenschicht 4 der Klimatisierungseinrichtung verteilt.

## Patentansprüche

1. Klimatisierungseinrichtung für einen Fahrzeugsitz mit einem Abstandsmaterial (2), das zumindest einen Teil eines Luftverteilungsraums (1) bildet, einer das Abstandsmaterial (2) auf der Oberseite abdeckenden Oberseitenschicht (4), einer das Abstandsmaterial (2) auf der der Oberseitenschicht (4) gegenüberliegenden Unterseite abdeckenden, im Wesentlichen für Luft undurchlässigen Unterseitenschicht (5), wobei die Oberseitenschicht (4) und die Unterseitenschicht (5) um den Außenumfang des Abstandsmaterials (2) herum miteinander verbunden sind, einer Luftzufuhröffnung (6) zu dem Luftverteilungsraum (1) und Luftaustrittsöffnungen (10) in der Oberseitenschicht (4) zur Abgabe von Luft aus dem Luftverteilungsraum (1), **dadurch gekennzeichnet, dass** die Oberseitenschicht (4) und die Unterseitenschicht (5) zumindest um den Außenumfang herum über eine rahmenförmige Einlage (3), die aus Schaumstoff gebildet ist, verbunden sind, und dass die rahmenförmige Einlage (3) das Abstandsmaterial (2) und somit den Luftverteilungsraum (1) in Umfangsrichtung umgibt und begrenzt.

2. Klimatisierungseinrichtung nach Anspruch 1, **dadurch gekennzeichnet, dass** die rahmenförmige Einlage (3) mit der Oberseitenschicht (4) und/oder der Unterseitenschicht (5) verschweißt, bevorzugt verklebt, ist.

3. Klimatisierungseinrichtung nach Anspruch 1 oder 2, **dadurch gekennzeichnet, dass** die rahmenförmige Einlage (3) eine Breite, in Richtung der Ebene der Oberseitenschicht (4) oder der Unterseitenschicht (5) gesehen, von 5 mm bis 30 mm, bevorzugt von 5 mm bis 20 mm, oder von 10 mm bis 15 mm, aufweist.

4. Klimatisierungseinrichtung nach einem der Ansprüche 1 bis 3, **dadurch gekennzeichnet, dass** die rahmenförmige Einlage (3), in Richtung senkrecht zu der Ebene der Oberseitenschicht (4) oder der Unterseitenschicht (5) gesehen, eine Dicke aufweist, die in etwa der Dicke des Abstandsmaterials (2) in dieser Richtung entspricht.

5. Klimatisierungseinrichtung nach einem der Ansprüche 1 bis 4, **dadurch gekennzeichnet, dass** das Abstandsmaterial (2) mindestens eine Ausstanzung (8) aufweist, die mit einem Inlay (9) aus im Wesentlichen luftundurchlässigem Material ausgefüllt ist.

6. Klimatisierungseinrichtung nach Anspruch 5, **dadurch gekennzeichnet, dass** zumindest das mindestens eine Inlay (9) über zumindest einen Steg mit der rahmenförmigen Einlage (3) einstückig verbunden ist.

7. Klimatisierungseinrichtung nach Anspruch 5 oder 6, **dadurch gekennzeichnet, dass** das mindestens eine Inlay (9) mit der Oberseitenschicht (4) und/oder der Unterseitenschicht (5) verklebt ist.

8. Klimatisierungseinrichtung nach einem der Ansprüche 5 bis 7, **dadurch gekennzeichnet, dass** im Bereich des mindestens einen Inlays (9) eine von der Oberseitenschicht (4) bis zur Unterseitenschicht (5) reichende Durchgangsöffnung (12) vorhanden ist, die sich durch die Oberseitenschicht (4) und gegebenenfalls durch die Unterseitenschicht (5) fortsetzt.

9. Klimatisierungseinrichtung nach einem der Ansprüche 5 bis 8, **dadurch gekennzeichnet, dass** das mindestens eine Inlay (9) als die Luftströmung innerhalb des Luftverteilungsraums (1) leitender und verteilender oder kanalisierender Strömungsleitkörper ausgeführt ist.

10. Klimatisierungseinrichtung nach einem der Ansprüche 1 bis 9, **dadurch gekennzeichnet, dass** die Oberseitenschicht (4) zusätzlich zu den Luftaustrittsöffnungen (10) zumindest teilweise für Luft durchlässig ist.

11. Klimatisierungseinrichtung nach einem der Ansprüche 1 bis 10, **dadurch gekennzeichnet, dass** die Anzahl der Luftaustrittsöffnungen (10) pro Flächeneinheit des Luftverteilungsraums (1), in Projektion auf die Oberseitenschicht (4) gesehen, mit zunehmendem Abstand von der Luftzufuhröffnung (6) zunimmt.

12. Klimatisierungseinrichtung nach einem der Ansprüche 1 bis 11, **dadurch gekennzeichnet, dass** die Stauchhärte der rahmenförmigen Einlage (3) der Stauchhärte des Abstandsmaterials (2) angepasst ist.

13. Klimatisierungseinrichtung nach einem der Ansprüche 5 bis 12, **dadurch gekennzeichnet, dass** die Stauchhärte des mindestens einen Inlays (9) der Stauchhärte des Abstandsmaterials (2) angepasst ist.

14. Klimatisierungseinrichtung nach einem der Ansprüche 1 bis 13, **dadurch gekennzeichnet, dass** die Luftzufuhröffnung (6) zu dem Luftverteilungsraum (1) durch eine Unterbrechung (13) der rahmenförmigen Einlage (3) gebildet ist.

## Claims

1. Air conditioning unit for a vehicle seat comprising separating material (2) that forms at least a portion of an air-distribution chamber (1), an upper-side layer (4) covering the separating material (2) on its upper side, a lower-side layer (5) which covers the separating material (2) on the underside opposite the upper-side layer (4) that is essentially airtight, the upper-side layer (4) and the lower-side layer (5) being connected together about the outer circumference of the separating material (2), and having an air-inlet aperture (6) to the air-distribution chamber (1) and air-outlet apertures (10) in the upper-side layer (4) to discharge air from the air-distribution chamber (1), **characterized in that** the upper-side layer (4) and the lower-side layer (5) are connected at least about the outer circumference by a box-shaped insert (3) which is formed of a foam material, and that the box-shaped insert (3) surrounds and limits the separating material (2) and thus the air-distribution chamber (1) in circumferential direction.

2. Air conditioning unit according to claim 1, **characterized in that** the box-shaped insert (3) is welded, preferably adhered, to at least one of the upper-side layer (4) and the lower-side layer (5).

3. Air conditioning unit according to claim 1 or 2, **characterized in that** the box-shaped insert (3) possesses a width viewed in a direction of a plane of the upper-side layer (4) or of the lower-side layer (5), of from 5 mm to 30 mm, preferably of from 5 mm to 20 mm, or of from 10 mm to 15 mm.

4. Air conditioning unit according to one of claims 1 to 3, **characterized in that** the box-shaped insert (3), viewed in a direction perpendicular to a plane of the upper-side layer (4) or of the lower-side layer (5), possesses a thickness that corresponds approximately to the thickness of the separating material (2) in this direction.

5. Air conditioning unit according to one of claims 1 to 4, **characterized in that** the separating material (2) possesses at least one punched-out area (8) that is filled with an inlay (9) of essentially airtight material.

6. Air conditioning unit according to claim 5, **characterized in that** at least the at least one inlay (9) is integrally connected to the box-shaped insert (3) by at least one web.

7. Air conditioning unit according to claim 5 or 6, **characterized in that** the at least one inlay (9) is adhered to at least one of the upper-side layer (4) and the lower-side layer (5).

8. Air conditioning unit according to one of claims 5 to 7, **characterized in that** a pass-through aperture (12) is present, extending from the upper-side layer (4) to the lower-side layer (5) in the area of the at least one inlay (9), that continues through the upper-side layer (4) and optionally through the lower-side layer (5).

9. Air conditioning unit according to one of claims 5 to 8, **characterized in that** the at least one inlay (9) is designed as a flow-guide body which guides and distributes or channels the air flow within the air distribution chamber (1).

10. Air conditioning unit according to one of claims 1 to 9, **characterized in that** the upper-side layer (4), in addition to the air-outlet apertures (10), is at least partially non-airtight.

11. Air conditioning unit according to one of claims 1 to 10, **characterized in that** the number of the air-outlet apertures (10) per unit of area of the air-distribution chamber (1), viewed in projection onto the upper-side layer (4), increases as the separation from the air-inlet aperture (6) increases.

12. Air conditioning unit according to one of claims 1 to 11, **characterized in that** the compression hardness of the box-shaped insert (3) is matched to the compression hardness of the separation material (2).

13. Air conditioning unit according to one of claims 5 to 12, **characterized in that** the compression hardness of the at least one inlay (9) is matched to the compression hardness of the separation material (2).

14. Air conditioning unit according to one of claims 1 to 13, **characterized in that** the air-inlet aperture (6) to the air-distribution chamber (1) is formed by an opening (13) in the box-shaped insert (3).

## Revendications

1. Dispositif de climatisation pour un siège de véhicule, comprenant un matériau d'espacement (2), qui forme au moins une partie d'une chambre de répartition d'air (1), une couche de côté supérieur (4), qui recouvre le matériau d'espacement (2) sur le côté supérieur, une couche de côté inférieur (5), qui est sensiblement imperméable à l'air et recouvre le matériau d'espacement (2) sur le côté inférieur opposé à la couche de côté supérieur (4), la couche de côté supérieur (4) et la couche de côté inférieur (5) étant reliées mutuellement autour de la périphérie extérieure du matériau d'espacement (2), une ouverture d'amenée d'air (6) à la chambre de répartition d'air (1), et des ouvertures de sortie d'air (10) dans la couche de côté supérieur (4), pour délivrer de l'air à partir de la chambre de répartition d'air (1), **caractérisé en ce que** la couche de côté supérieur (4) et la couche de côté inférieur (5) sont reliées, tout au moins autour de la périphérie extérieure, par l'intermédiaire d'un insert (3) en forme de cadre, qui est réalisé en mousse, et **en ce que** l'insert (3) en forme de cadre entoure et délimite le matériau d'espacement (2) et ainsi la chambre de répartition d'air (1), dans la direction périphérique.

2. Dispositif de climatisation selon la revendication 1, **caractérisé en ce que** l'insert (3) en forme de cadre est soudé, de préférence collé, à la couche de côté supérieur (4) et/ou à la couche de côté inférieur (5).

3. Dispositif de climatisation selon la revendication 1 ou la revendication 2, **caractérisé en ce que** l'insert (3) en forme de cadre présente, vu dans la direction du plan de la couche de côté supérieur (4) ou de la couche de côté inférieur (5), une largeur de 5 mm à 30 mm, de préférence de 5 mm à 20 mm, ou de 10 mm à 15 mm.

4. Dispositif de climatisation selon l'une des revendications 1 à 3, **caractérisé en ce que** l'insert (3) en forme de cadre présente, vu dans la direction perpendiculaire au plan de la couche de côté supérieur (4) ou de la couche de côté inférieur (5), une épaisseur qui correspond environ à l'épaisseur du matériau d'espacement (2) dans cette direction.

5. Dispositif de climatisation selon l'une des revendications 1 à 4, **caractérisé en ce que** le matériau d'espacement (2) présente au moins une découpe (8), qui est remplie par une garniture encastrée (9) en un matériau sensiblement imperméable à l'air.

6. Dispositif de climatisation selon la revendication 5, **caractérisé en ce qu'**au moins ladite au moins une garniture encastrée (9) est reliée d'un seul tenant à l'insert (3) en forme de cadre, par l'intermédiaire d'au moins une nervure.

7. Dispositif de climatisation selon la revendication 5 ou la revendication 6, **caractérisé en ce que** ladite au moins une garniture encastrée (9) est collée à la couche de côté supérieur (4) et/ou à la couche de côté inférieur (5).

8. Dispositif de climatisation selon l'une des revendications 5 à 7, **caractérisé en ce que** dans la zone de ladite au moins une garniture encastrée (9), il existe une ouverture de passage traversante (12), qui s'étend de la couche de côté supérieur (4) jusqu'à la couche de côté inférieur (5), et qui se prolonge à travers la couche de côté supérieur (4) et, le cas échéant, à travers la couche de côté inférieur (5).

9. Dispositif de climatisation selon l'une des revendications 5 à 8, **caractérisé en ce que** ladite au moins une garniture encastrée (9) est réalisée en tant que corps de guidage d'écoulement, qui guide et répartit ou canalise l'écoulement d'air à l'intérieur de la chambre de répartition d'air (1).

10. Dispositif de climatisation selon l'une des revendications 1 à 9, **caractérisé en ce que** la couche de côté supérieur (4), en plus des ouvertures de sortie d'air (10), est au moins en partie perméable à l'air.

11. Dispositif de climatisation selon l'une des revendications 1 à 10, **caractérisé en ce que**, vu en projection sur la couche de côté supérieur (4), le nombre des ouvertures de sortie d'air (10) par unité de surface de la chambre de répartition d'air (1), augmente avec une distance croissante à l'ouverture d'amenée d'air (6).

12. Dispositif de climatisation selon l'une des revendications 1 à 11, **caractérisé en ce que** la dureté à l'écrasement de l'insert (3) en forme de cadre, est adaptée à la dureté à l'écrasement du matériau d'espacement (2).

13. Dispositif de climatisation selon l'une des revendications 5 à 12, **caractérisé en ce que** la dureté à l'écrasement de ladite au moins une garniture encastrée (9), est adaptée à la dureté à l'écrasement du matériau d'espacement (2).

14. Dispositif de climatisation selon l'une des revendications 1 à 13, **caractérisé en ce que** l'ouverture d'amenée d'air (6) à la chambre de répartition d'air (1) est formée par une interruption (13) de l'insert (3) en forme de cadre.
